# EUROPÄISCHE PATENTSCHRIFT

(11) **EP 1 596 063 B1**
(45) Veröffentlichungstag und Bekanntmachung des Hinweises auf die Patenterteilung: **28.09.2016**
(21) Anmeldenummer: 05009781.5
(22) Anmeldetag: 04.05.2005
(51) Int. Cl.: F03D 1/06, F03D 80/00

(54) **Windturbine mit gekrümmten Rotorblättern**
Wind turbine with bent rotor blades
Eolienne avec pales de rotor courbées

(30) Priorität: 11.05.2004 DE 102004023774
(43) Veröffentlichungstag der Anmeldung: 16.11.2005
(73) Patentinhaber: Senvion GmbH, 22297 Hamburg (DE)
(72) Erfinder: Schubert, Matthias, 24768 Rendsburg (DE)
(74) Vertreter: Glawe, Delfs, Moll

(56) Entgegenhaltungen:
- EP-A- 1 394 406
- WO-A-03/019004
- WO-A-03/060319
- DE-C- 382 689
- DE-U1- 29 612 720
- DE-U1- 29 880 145

## Beschreibung

Die vorliegende Erfindung betrifft eine Windenergieanlage mit einem Turm auf dessen oberem Ende eine Gondel angeordnet ist. An der Gondel ist außen ein Rotor angeordnet, der um eine Rotordrehachse drehbar ist. Der Rotor weist eine Rotornabe und mindestens ein sich von der Rotornabe erstreckendes Rotorblatt auf.

Um mittels einer Windenergieanlage soviel Energie wie möglich aus dem Wind aufnehmen zu können, geht die Entwicklung der Windenergieanlagen dahin, dass die Durchmesser der Rotoren immer größer ausgelegt werden. Bekannte Windenergieanlagen weisen bereits einen Durchmesser von 90 m auf. Dies hat zur Folge, dass die Masse des Rotors, der in der Regel drei Rotorblätter aufweist ebenfalls entsprechend zunimmt. Unter anderem aus diesem Grunde sind Rotorblätter entwickelt worden, die relativ leicht sind aber auch eine entsprechende Steifigkeit aufweisen, um dem Wind den erforderlichen Widerstand zu bieten.

In der Regel bestehen die heute eingesetzten Rotorblätter aus einer geschlossenen Schalenkonstruktion. Der Einsatz von Schalenkonstruktionen bietet den Vorteil, dass Rotorblätter mit einer relativ geringen Masse und erhöhte Steifigkeit hergestellt werden können. Dennoch weisen bekannte Rotorblätter immer noch eine gewisse elastische Nachgiebigkeit auf, die naturgemäß mit der Länge der Rotorblätter zunimmt.

Die elastische Nachgiebigkeit eines Rotorblattes muss insbesondere bei der Konfiguration einer Windenergieanlage des Vorderläufertyps (d.h. die Anlage ist so ausgebildet, dass der Wind immer zuerst den Rotor und anschließend den Turm trifft) berücksichtigt werden, da die Rotorblattspitzen durch den Winddruck in Richtung des Turmes gebogen werden. Je stärker der Wind ist, um so stärker werden die Rotorblattspitzen in Richtung des Turmes gebogen. Diese zum Turm gerichtete Verbiegung des Rotorblatts kann im schlimmsten Fall so groß sein, dass es zu einer Kollision des oder der Rotorblätter mit dem Turm kommt.

Um eine Kollision zu vermeiden, sind bekannte Windenergieanlagen so ausgebildet, dass der Rotor in einem größtmöglichem Abstand vom Turm entfernt an der Gondel angeordnet wird. Aufgrund der bereits erwähnten großen Masse des Rotors weist diese Anordnung aber den Nachteil auf, dass mit zunehmenden Abstand zwischen Rotor und Turm das Biegemoment entsprechend zunimmt und daher Gondel und Turm so dimensioniert sein müssen, dass sie das Biegemoment aufnehmen können, wobei diese Dimensionierung hohe Kosten verursacht.

Aufgabe der vorliegenden Erfindung ist eine Windenergieanlage mit einem optimierten Rotor zu schaffen, der so konfiguriert ist, dass er eine möglichst geringe Masse aufweist und dessen Rotorblätter so ausgebildet sind, dass eine Kollision der Rotorblätter mit dem Turm sicher vermieden werden kann.

Gelöst wird die Aufgabe mit einer Windenergieanlage mit den Merkmalen des Anspruchs 1.

Erfindungsgemäß ist das Rotorblatt stumpfwinklig zu der Rotordrehachse vom Turm weg geneigt ausgerichtet an der Rotornabe angeordnet und in mindestens einem Längenabschnitt gekrümmt zu der Längsachse ausgebildet.

Aus der DE 296 12 720 U1 ist es zur Vermeidung einer Kollision der Rotorblätter mit dem Turm bekannt, die Rotorblätter in einem sogenannten Konuswinkel anzuordnen. Der Konuswinkel wird durch die Längsachse des Rotorblatts und einer Normalebene gebildet, wobei sich die Normalebene von dem Schnittpunkt der Längsachse und der Rotordrehachse senkrecht zu der Rotordrehachse erstreckt. Diese Rotorkonfiguration weist aber den Nachteil auf, dass zur sicheren Vermeidung einer Kollision, der Konuswinkel verhältnismäßig groß ausgebildet sein muß (ca. 3- 7°). Ab einem Konuswinkel von 2° wird jedoch das Biegemoment in der Blattwurzel (Verbindungsbereich Rotorblatt/ Rotornabe) durch die Zentrifugalkraft spürbar erhöht. Dies ist insbesondere deshalb von Nachteil, weil bei Windenergieanlagen vom Vorderläufertyp dieses Zentrifugalkraftbiegemoment zusätzlich zu dem, durch den Winddruck entstehenden Biegemoment auftritt und dieses damit nachteilig verstärkt. Aus diesem Grunde sollte der Konuswinkel möglichst weniger als 4° betragen.

Weiterhin reduziert die Anordnung der Rotorblätter mit zunehmenden Konuswinkel die Windangriffsfläche der Rotorblätter, was zu Einbußen bei der Leistungserzeugung führten kann.

Aus der WO 03/060319 A1 ist es zur Vermeidung einer Kollision der Rotorblätter mit dem Turm ebenfalls bekannt, die Rotorblätter in einem sogenannten Konuswinkel anzuordnen. Dazu wird zwischen der Rotornabe und dem Rotorblatt ein geeignetes Zwischenstück angeordnet.

Bei der vorliegenden Erfindung weisen die Rotorblätter zusätzlich zu einem Konus eine Blattkrümmung auf. Durch diese Kombination wird ein größtmöglicher Abstand von der Rotorblattspitze zur Turmwand erreicht, ohne dass die erfinderische Rotorkonfiguration die oben beschriebenen Nachteile der bekannten Rotorkonfigurationen aufweist. Durch das Vorsehen einer Blattkrümmung kann der Konuswinkel wesentlich kleiner gewählt werden als es aus dem Stand der Technik bekannt ist, wodurch ermöglicht wird, dass die Zentrifugalkräfte im akzeptablen Bereich und die Windangriffsfläche der Rotorblätter nahezu senkrecht zu der Windrichtung angeordnet ist und somit die Leistungsausbeute verbessert wird.

Gemäß einer vorteilhaften Ausgestaltung der Erfindung ist das Rotorblatt so ausgebildet, dass es in einem ersten an der Rotornabe beginnenden Längenabschnitt bis zu einem definierten Abstand von der Rotornabe gerade verlaufend ausgebildet ist, und in einem zweiten an den ersten Längenabschnitt anschließenden Längenabschnitt, der sich bis zur Rotorblattspitze erstreckt, bereichsweise nach vom gerichtet gekrümmt ausgebildet ist.

Aus der DE 298 80 145 U1 ist bekannt, ein Rotorblatt so auszubilden, dass es sich zunächst rechtwinklig zu der Rotordrehachse nach außen erstreckt und sich dann im Abstand von der Nabe in einer nach außen und nach vorn gerichteten gekrümmten Weise weiter erstreckt. Damit ein ausreichender Abstand zwischen den Rotorblättern und dem Turm erreicht wird, müssen die bekannten Rotorblätter eine entsprechende starke Krümmung aufweisen. Die erforderliche starke Blattkrümmung führt aber bereits bei der Herstellung der Rotorblattnegativform sowie bei der anschließenden Produktion des Rotorblatts selbst zu großen Problemen. Auch bei dem Transport des Rotorblatts ergeben sich aufgrund der großen Abmaße der Rotorblätter große Schwierigkeiten. Bekannte Rotorblätter sind in der Regel mittlerweile mindestens 35 m lang. Wenn solche Rotorblätter zusätzlich noch eine starke Blattkrümmung aufweisen, ist ein Transport der Blätter nur noch mit speziell dafür konstruierten Transportmitteln realisierbar, wodurch zusätzliche Kosten entstehen.

Rotorblätter mit einer zu starken Blattkrümmung weisen aber noch einen weiteren entscheidenden Nachteil auf. Aufgrund der Blattkrümmung entstehen im Blatt hohe Torsionslasten, die zu einer aerodynamisch nachteiligen Verwindung des Rotorblattes führen. Häufig sind bekannte Windenergieanlagen so ausgebildet, dass die Rotorblätter um ihre Längsachse drehbar an der Rotornabe gelagert sind. Hintergrund ist, dass dadurch die Möglichkeit geschaffen wird die Energieaufnahme aus dem Wind aufgrund der einer Verstellung der Ausrichtung der Rotorblätter zu regulieren, wobei die Verstellung der Rotorblätter über Blattverstellsysteme erfolgt. Die erforderlichen Verstellmomente sind dann am geringsten, wenn das Rotorblatt im höchstbelasteten Zustand möglichst gerade ist. Andererseits ist es aus Sicherheitsgründen wünschenswert, wenn das Torsionsmoment des Blattes so wirkt, dass das Blatt sich in die belastungsreduzierende Richtung, die sogenannte Fahnenstellung verdreht.

Bei heutigen Großanlagen, die nur mit Vorkrümmung ausgelegt sind, ist die erforderliche Vorkrümmung bereits zu groß, um einen lastarmen Betrieb und den Sicherheitsaspekt realisieren zu können. Durch die erfindungsgemäße Kombination von Konuswinkel und Vorkrümmung werden beide Aspekte erheblich verbessert..

Die DE 298 80 145 U1 weist explizit daraufhin, dass die stumpfwinklige Anordnung der Rotorblätter zu der Rotordrehachse nachteilig ist. Neben den oben beschriebenen Nachteilen weise die konische Anordnung der Rotorblätter zudem den Nachteil auf sehr teuer in der Herstellung zu sein. Zum anderen biete der "Kegelrotor" unter ästhetischen Gesichtspunkten Anlass zur Kritik.

Demgegenüber ist bei der vorliegenden Erfindung erkannt worden, dass durch eine Kombination dieser beiden Rotorkonfigurationen, die jede für sich Nachteile aufweist, eine optimale Rotorkonfiguration erreicht werden kann.

Die vorliegende Erfindung bietet den Vorteil, dass damit eine Kollision in einfacher Weise vermeidbar ist, ohne signifikante Einbußen bei der Leistungserzeugung oder erhöhte Lasten durch das Auftreten von Zentrifugalkräften oder Torsion.

Durch die erfindungsgemäße Rotorkonstruktion kann das Rotorblatt so konstruiert werden, dass eine deutliche Verformung der Blattstruktur in Schlagrichtung zugelassen werden kann, ohne Sicherheitsanforderungen zu verletzen. Zudem kommt die Konstruktion des Blattes mit einer deutlich geringeren Masse in der tragenden Blattstruktur aus. Besonders bei Blättern aus Faserverbundwerkstoffen mit einer Epoydharzmatrix kann dieser Vorteil genutzt ausgenutzt werden, da die Betriebsfestigkeitseigenschaften dieser Matrix besonders gut sind und dadurch die Struktursicherheiten für die Belastung aus Extremlasten und Betriebsfestigkeitslasten sehr eng beieinander liegen, das Material also in jeder Hinsicht optimal ausgenutzt wird.

Die erfindungsgemäße Rotorkonfiguration bietet weiterhin den Vorteil, dass sich durch die Kombination Konus und geringe Blattkrümmung die Vorteile einer starken Blattkrümmung weitgehend erzielt werden, jedoch mit dem wesentlichen Unterschied, dass durch den geraden Innenbereich und das (um den Konuswinkel) geneigte Rotorblatt die Torsionslasten im Blatt und in den Blattverstellsystemen deutlich reduziert werden, also die Nachteile einer starken Blattkrümmung vermieden werden.

Die erfindungsgemäße Blattkrümmung kann unterschiedlich Formen aufweisen. So kann die Blattkrümmung beispielsweise bereits im Bereich der Rotornabe beginnen. Die vorteilhafteste Ausführung ergibt sich dann, wenn das Rotorblatt im Normalbetrieb also bei Windgeschwindigkeiten etwas unterhalb der Nennwindgeschwindigkeit in etwa in eine gerade Form gedrückt wird. Hierzu ist es zur Auslegung am einfachsten, die Vorkrümmung durch Überlagerung der ersten beiden Schwingungseigenformen zu generieren. Theoretisch führt dies zu Krümmungsverläufen, die direkt an der Blattwurzel mit sehr kleinen Vorkrümmungen beginnt. Da die Rotorblattwurzel vergleichsweise sehr steif ausgeführt ist, haben bei der Anmelderin durchgeführte Berechnungen ergeben, dass in der Praxis ein Vorkrümmung, die etwa bei 40% des Rotorradius beginnt, ausreicht, d.h. dass der erste Längenabschnitt etwa 40% der Blattlänge ausmacht.

Die Krümmung im zweiten Längenabschnitt muss nicht kontinuierlich ausgeführt sein. Eine vorteilhafte Ausführung sieht auch vor, nach einem gekrümmten Bereich den Bereich der Blattspitze wiederum gerade auszuführen. Dies kann insbesondere unter Fertigungs- und Transportgesichtspunkten vorteilhaft sein.

Wie oben bereits erwähnt, entstehen durch eine zu starke Rotorblattkrümmung aber auch Probleme in Bezug auf den Transport der Rotorblätter. Gemäß einer weiteren vorteilhaften Ausgestaltung der Anmeldung kann der zweite Längenabschnitt daher auch so ausgebildet sein, daß er weniger als ein Drittel des Rotorblatts ausmacht.

Das Rotorblatt ist mit der Rotornabe über ein Blattlager drehbar gekoppelt. Das Blattlager weist einen Außenring und einen Innenring auf, wobei gemäß einer vorteilhaften Ausgestaltung der Erfindung der Innenring fest mit der Rotornabe verbunden ist und der Außenring fest mit dem Rotorblatt verbunden ist.

Durch die vorteilhafte Ausgestaltung, das Rotorblatt an dem Außenring zu montieren, wird die Möglichkeit geschaffen, die Masse des Rotors noch weiter zu reduzieren. Bei bekannten Windenergieanlagen wird in der Regel das Rotorblatt an dem Innenring des Blattlagers befestigt. Um weitere Masse einsparen zu können, müßte der Durchmesser des Rotorblattes in seinem Wurzelbereich (der Bereich, an dem das Rotorblatt mit der Nabe verbunden ist) größer sein.

Der größere Durchmesser wird durch die erfindungsgemäße Montage des Blattes auf den Lageraußenring auf vorteilhafte Weise realisiert, ohne dass der Durchmesser des Verbindungsbereichs in der Rotornabe entsprechend vergrößert werden muss. Durch diese Geometrie kann, wenn die gleiche Materialmenge wie bisher verwendet werden würde, das Widerstandsmoment maximiert werden.

Die auftretenden Lasten werden durch die Geometrieänderung im Blattwurzelbereich praktisch nicht verändert, da die Biegemomente gegenüber der bekannten Konfiguration praktisch konstant bleiben, ist durch die erfindungsgemäße bevorzugte Montage des Rotorblattes am Außenring die Möglichkeit geschaffen worden Material einzusparen und dabei das Widerstandsmoment konstant zu halten, so dass durch die vorteilhafte Ausgestaltung eine weitere Reduzierung der Rotormasse erreicht wird.

Durch die Montage des Innenrings des Blattlagers an die Rotornabe ergibt sich zudem der wesentliche Vorteil, dass die Abmessungen des Nabenkörpers kleiner als bei der bekannten Rotorkonfiguration gehalten werden können.

Gemäß einer weiteren vorteilhaften Ausgestaltung der Erfindung ist die Rotordrehachse gegenüber der Horizontalen nach oben geneigt ausgebildet.

Diese Ausgestaltung ist ebenfalls aus der DE 296 12 720 U1 und der DE 298 80 145 bekannt. Sie weist jedoch den großen Nachteil auf, dass um mit Sicherheit eine Kollision vermeiden zu können auch hier die Angriffsfläche des Rotorblattes ungünstig zu der Windrichtung angeordnet wird und es daher auch durch diese Konfiguration zu empfindlichen Leistungseinbußen kommt.

Durch die Kombination mit dem Konus und der Blattkrümmung kann die Neigung jedoch entsprechend gering ausfallen, so dass die Leistungseinbußen entsprechend minimierbar sind.

Die Blattverstellung erfolgt häufig dergestalt, dass der Ring des Blattlagers, an dem das Rotorblatt montiert ist, eine Verzahnung aufweist. In Eingriff mit der Verzahnung ist ein Ritzel, welches über einen Verstellantrieb in eine Drehbewegung versetzt wird, wodurch eine Verstellung der Winkelstellung des Rotorblattes ermöglicht wird. Wie oben bereits erwähnt, ist bei bekannten Windenergieanlagen das Rotorblatt an dem Innenring des Blattlagers montiert. Der Innenring weist zu Verstellzwecken eine Innenverzahnung auf, entsprechend ist auch das Ritzel und der Verstellantrieb innen angeordnet. Bei vorteilhaften Ausgestaltungen der erfindungsgemäßen Rotorkonfiguration ist das Blatt an dem Außenring des Blattlagers montiert. Dementsprechend weist der Außenring eine Außenverzahnung auf und der Verstellantrieb ist außen angeordnet.

Durch die äußere Anordnung des Verstellantriebs kann der nabenseitige Blattanschluß deutlich steifer gestaltet werden als vorher, da der Flanschinnenraum für eine umlaufende, undurchbrochene Versteifungsrippe genutzt werden kann. Die kompakte Bauweise ermöglicht eine deutlich steifere Ausführung der Nabe, ein für die Blattlager wichtiges Auslegungskriterium. Anders herum führt dies bei gleicher Steifigkeit zu deutlichen Vorteilen für die Betriebsfestigkeit der Rotornabe, der Verschraubung Blattlager - Nabe und des Blattlagers. Weiterhin bewirkt die äußere Anordnung der Verstellantriebe durch den vergrößerten Hebelarm zum Mittelpunkt des Blattlagers höhere Verstellmomente bei gleicher Antriebsleistung. Zudem unterliegen die Antriebsantriebe durch die äußere Anordnung praktisch keiner Größenbeschränkung, wie es bei der inneren Anordnung der Fall war.

Die erfindungsgemäße Rotorkonfiguration vereint nicht nur alle Vorteile bekannter Einzellösungen, sondern realisiert auch noch zusätzliche Synergieeffekte. So bietet die erfindungsgemäße Rotorkonfiguration den Vorteil, dass alle Bauteile nochmals wesentlich leichter ausgeführt werden können, als bei der Realisierung als Einzelmerkmale. Zudem ergeben sich durch die vergleichsweise kleinen Abmessungen zusätzliche Vorteile beim Guß und beim Transport des Nabenkörpers.

Bei der bekannten Anordnung war der Zugang in das Innere des Rotorblattes aufgrund der Verstellantrieb nur sehr beengt möglich. Dieser Zugang ist durch die äußere Anordnung der Verstellantrieb gemäß vorteilhafter Ausgestaltungen der Erfindung jetzt deutlich leichter.

Im folgenden soll die Erfindung anhand eines Ausführungsbeispiels näher erläutert werden. Es zeigen:
- Fig 1: eine Windenergieanlage mit einer erfindungsgemäßen Rotorkonfiguration
- Fig 2: Schnitt durch den Rotor einer erfindungsgemäßen Windenergieanlage im Bereich der Verbindung Rotorblatt/ Rotornabe.

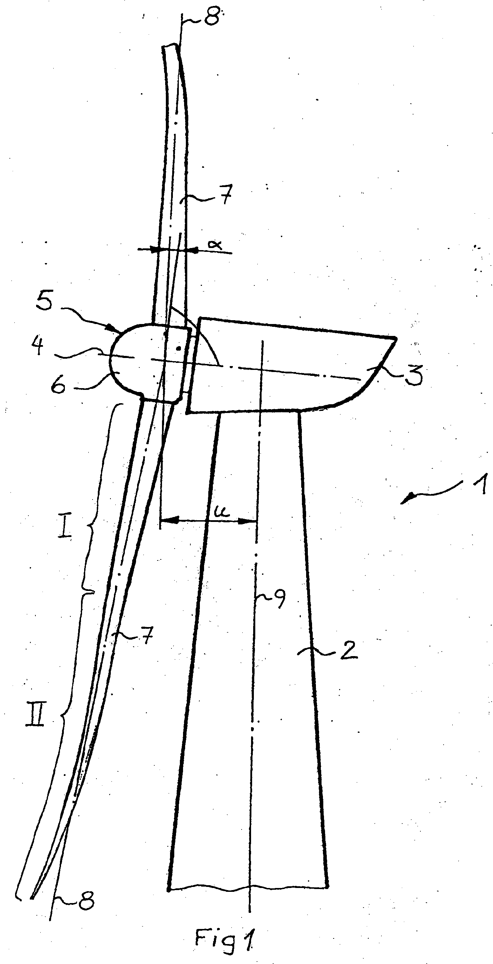

Die Fig 1 zeigt eine Windenergieanlage 1 mit einem Turm 2 auf dessen oberen Ende eine Gondel 3 angeordnet ist. An der Gondel ist ein, um eine Rotordrehachse 4 drehbarer Rotor 5 angeordnet, der eine Rotornabe 6 sowie sich von der Rotornabe 6 nach außen erstreckenden Rotorblätter 7 aufweist, die um eine Längsachse 8 drehbar sind.

In dem dargestellten Ausführungsbeispiel sind die Rotorblätter 7 in einem Konuswinkel α, der durch die Längsachse 8 des Rotorblatts 7 und der Normalebene gebildet wird, zu der Rotornabe 6 angeordnet, wobei sich die Normalebene von dem Schnittpunkt der Längsachse 8 und der Rotordrehachse 4 senkrecht zu der Rotordrehachse 4 erstreckt.. Die Rotorblätter 7 sind so ausgebildet, dass sie einen ersten Längenabschnitt I aufweisen, der von der Rotornabe gerade verlaufend ausgebildet ist. An den ersten Längenabschnitt I schließt der zweite Längenabschnitt 11 an, der sich bis zur Rotorblattspitze nach vorn gerichtet gekrümmt erstreckt.

Damit die Rotorblätter frei drehen können und nicht mit dem Turm kollidieren, ist der Rotor 5 so zu der Gondel 3 angeordnet, dass ein Überhang U zu der Turmachse 9 vorgesehen ist. Wie die Fig 1 verdeutlicht wird, kann der Überhang U durch die erfindungsgemäße Rotorblattkonfiguration vorteilhaft kürzer ausgestaltet sein, als es der Fall wäre, wenn z. B. der Rotor nur die konische Anordnung der Rotorblätter aufweisen würde.

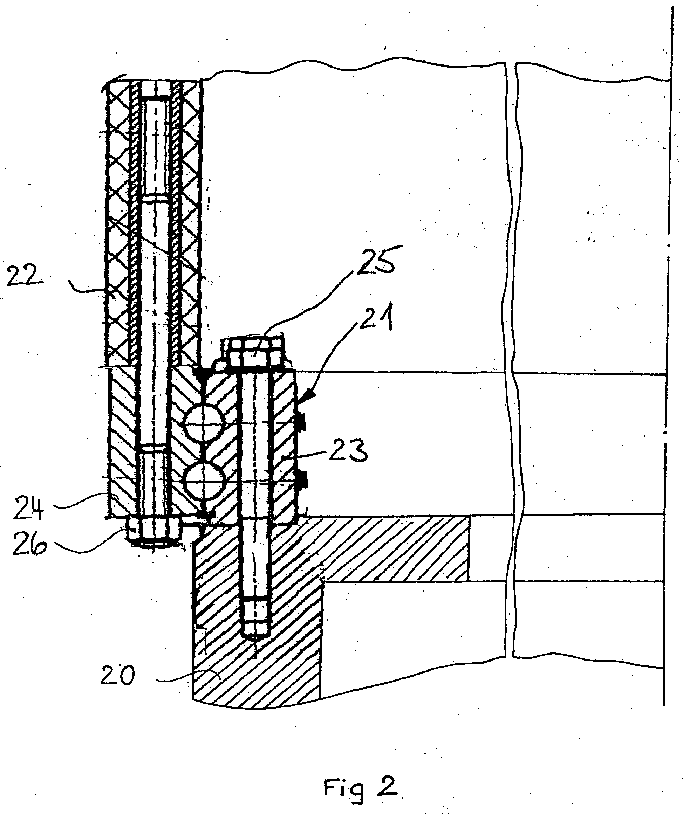

Die Fig 2 zeigt in einem Halbschnitt einen Anschlußflansch 20 einer Rotornabe, der über ein Blattlager 21 mit einem Rotorblatt 22 gekoppelt ist. Bei dem Blattlager handelt es sich um ein Vierpunktlager, das einen Innenring 23 und einen Außenring 24 aufweist, wobei der Innenring 23 über Schraubenverbindungen 25 fest mit dem Anschlußflansch 20 der Rotornabe verbunden ist und das Rotorblatt 22 über Schraubenverbindungen 26 fest mit dem Außenring 24 verbunden.

Wie bereits mehrfach erwähnt, sind bekannte Windenergieanlagen in der Regel so ausgebildet, dass das Rotorblatt 22 an den Innenring 23 montiert ist. Die dargestellte Ausführungsform weist dem gegenüber den Vorteil auf, dass entwedet ein Rotorblatt eingesetzt werden kann, das einen größeren Rotoranschlußdurchmesser aufweist oder umgekehrt besteht die Möglichkeit, dass der Rotoranschlußdurchmesser gleichbleibt und der Durchmesser des Anschluflansches in der Rotornabe kleiner ausgebildet wird, wodurch vorteilhaft eine kompaktere Nabe entsteht.

Neben den oben bereits diskutierten Vorteilen bietet diese Ausgestaltung zu dem einen weiteren Vorteil in Bezug auf die Flanschverschraubungen: Die Verschraubung des Rotorblattes mit dem Blattlager ist deutlich kritischer zu bewerten als die Verschraubung der Rotornabe mit dem Blattlager, was auf die große Nachgiebigkeit der aus Faserverbundwerkstoffen gefertigten Blattwurzel zurückzuführen ist. Ein größerer Flasnschdurchmesser an der Blattwurzel gegenüber dem Anschlußflansch erhöht somit die Wirtschaftlichkeit beider Flanschverbindungen.

## Patentansprüche

1. Windenergieanlage (1) mit einem Turm (2), einer auf dem oberen Ende des Turms (2) angeordneten Gondel (3), einem Rotor (5), der um eine Rotordrehachse (4) drehbar außen an der Gondel gelagert ist und der eine Rotornabe (6, 20) und mindestens ein sich von der Rotornabe (6, 20) erstrekkendes Rotorblatt (7, 22) aufweist, wobei das Rotorblatt (7, 22) stumpfwinklig zu der Rotordrehachse (4) vom Turm (2) weg geneigt ausgerichtet an der Rotornabe (6, 20) angeordnet ist, **dadurch gekennzeichnet, dass** das Rotorblatt (7, 22) in mindestens einem Längenabschnitt gekrümmt zu der Längsachse (8) ausgebildet ist.

2. Windenergieanlage nach Anspruch 1, **dadurch gekennzeichnet, dass** das Rotorblatt (7, 22) so ausgebildet ist, dass es in einem ersten an der Rotornabe (6, 20) beginnenden Längenabschnitt (I) bis zu einem definierten Abstand von der Rotornabe (7, 22) gerade verlaufend ausgebildet ist, und in einem zweiten an den ersten Längenabschnitt anschließenden Längenabschnitt (II), der sich bis zur Rotorblattspitze erstreckt, bereichsweise nach vorn gerichtet gekrümmt ausgebildet ist.

3. Windenergieanlage nach Anspruch 2, **dadurch gekennzeichnet, dass** der zweite Längenabschnitt (II) weniger als ein Drittel der Rotorblatts (7, 22) ausmacht.

4. Windenergieanlage nach einem der vorherigen Ansprüche, **dadurch gekennzeichnet, dass** das Rotorblatt (7, 22) mit einem an der Rotornabe (6, 20) montierten Blattlager (21) drehbar gekoppelt ist, das Blattlager (21) einen Außenring (24) und einen Innenring (23) aufweist, wobei der Innenring (23) fest mit der Rotornabe (6, 20) verbunden ist und der Außenring (24) fest mit dem Rotorblatt (7, 22) verbunden ist.

5. Windenergieanlage nach einem der vorherigen Ansprüche, **dadurch gekennzeichnet, dass** die Rotordrehachse (4) gegenüber der Horizontalen nach oben geneigt ist.

## Claims

1. Wind turbine (1) with a tower (2), with a nacelle (3) arranged on the upper end of the tower (2), and with a rotor (5) which is mounted on the outside of the nacelle so as to be rotatable about a rotor axis of rotation (4) and which has a rotor hub (6, 20) and at least one rotor blade (7, 22) extending from the rotor hub (6, 20), wherein the rotor blade (7, 22) is arranged on the rotor hub (6, 20) so as to be oriented with an inclination away from the tower (2) at an obtuse angle to the rotor axis of rotation (4), **characterized in that** the rotor blade (7, 22) is designed to be curved with respect to the longitudinal axis (8) in at least one length section.

2. Wind turbine according to Claim 1, **characterized in that** the rotor blade (7, 22) is designed such that it is designed to extend rectilinearly in a first length section (I), beginning at the rotor hub (6, 20), to a defined distance from the rotor hub (7, 22), and, in a second length section (II), which adjoins the first length section and extends to the rotor blade tip, is designed with a forwardly directed curvature in certain regions.

3. Wind turbine according to Claim 2, **characterized in that** the second length section (II) makes up less than a third of the rotor blade (7, 22).

4. Wind turbine according to one of the preceding claims, **characterized in that** the rotor blade (7, 22) is rotatably coupled with a blade bearing (21) which is mounted on the rotor hub (6, 20), and the blade bearing (21) has an outer ring (24) and an inner ring (23), wherein the inner ring (23) is fixedly connected to the rotor hub (6, 20) and the outer ring (24) is fixedly connected to the rotor blade (7, 22).

5. Wind turbine according to one of the preceding claims, **characterized in that** the rotor axis of rotation (4) is inclined upwardly with respect to the horizontal.

## Revendications

1. Installation éolienne (1) avec une tour (2), une nacelle (3) disposée sur l'extrémité supérieure de la tour (2), un rotor (5), qui est logé à l'extérieur de manière rotative au niveau de la nacelle autour d'un axe de rotation de rotor (6, 20) et qui comprend un moyeu de rotor (6, 20) et au moins une pale de rotor (7, 22) s'étendant à partir du moyeu de rotor (6, 20), la pale de rotor (7, 22) étant disposée de manière inclinée avec un angle obtus par rapport à l'axe de rotation du rotor (4) à partir de la tour (2), **caractérisée en ce que** la pale de rotor (7, 22) est incurvée dans au moins une portion de longueur par rapport à l'axe longitudinal (8).

2. Installation éolienne selon la revendication 1, **caractérisée en ce que** la pale de rotor (7, 22) est conçue de façon à ce que, dans une première portion de longueur (I), commençant au niveau du moyeu de rotor (6, 20), elle est conçue en ligne droite jusqu'à une distance définie du moyeu de rotor (7, 22) et, dans une deuxième portion de longueur (II), dans le prolongement de la première portion de longueur, qui s' »tend jusqu'à la pointe de la pale du rotor, elle est conçue de manière partiellement incurvée vers l'avant.

3. Installation éolienne selon la revendication 2, **caractérisée en ce que** la deuxième portion de longueur (II) constitue moins d'un tiers de la pale de rotor (7, 22).

4. Installation éolienne selon l'une des revendications précédentes, **caractérisée en ce que** la pale de rotor (7, 22) est couplée de manière rotative avec un palier de pale (21) monté sur le moyeu du rotor (6, 20), le palier de pale (21) comprend une bague extérieure (24) et une bague intérieure (23), la bague intérieure (23) étant reliée de manière solidaire avec le moyeu du rotor (6, 20) et la bague extérieure (24) étant reliée de manière solidaire avec la pale de rotor (7, 22).

5. Installation éolienne selon l'une des revendications précédentes, **caractérisée en ce que** l'axe de rotation du rotor (4) est incliné vers le haut par rapport à l'horizontale.
